# EUROPEAN PATENT APPLICATION

(11) **EP 3 742 413 A1**
(43) Date of publication of application: **25.11.2020**
(21) Application number: 19741618.3
(22) Date of filing: 16.01.2019
(51) Int. Cl.: G08B 17/107, G01N 21/53

(54) **SMOKE DETECTOR**

(30) Priority: 17.01.2018 JP 2018005965
(71) Applicant: Panasonic Intellectual Property Management Co., Ltd., Osaka-shi, Osaka 540-6207 (JP)
(72) Inventor: KAMITSU, Tomohiro, Osaka-shi, Osaka 540-6207 (JP); OI, Kana, Osaka-shi, Osaka 540-6207 (JP); HASHIMOTO, Yusuke, Osaka-shi, Osaka 540-6207 (JP); SAKAMOTO, Koji, Osaka-shi, Osaka 540-6207 (JP); UMEMURA, Takuya, Osaka-shi, Osaka 540-6207 (JP)
(74) Representative: Müller-Boré & Partner Patentanwälte PartG mbB
(86) International application number: PCT/JP2019/000992
(87) International publication number: WO 2019/142797

(57) **Abstract**

A smoke detector is provided which has a reduced size while a detection space is relatively widely secured. A smoke detector (1) includes a wall structure (3), a light emitting element (4), and a light receiving element (5). The wall structure (3) surrounds a detection space (Spl) when viewed from one direction orthogonal to an upper surface (731) of a bottom plate (73). The light emitting element (4) has a light emission surface (41) and is configured to emit light from the light emission surface (41) toward the detection space (Spl). The light receiving element (5) is disposed at a location where the light receiving element (5) is free from incidence of direct light from the light emitting element (4) and scattered light by smoke in the detection space (Spl) is incident on the light receiving element (5). The wall structure (3) has an inner side surface (31) facing the detection space (Spl) and an outer side surface (32) facing away from the detection space (Spl) on opposing sides in a thickness direction of the wall structure (3).The wall structure (3) is configured to allow the smoke to pass therethrough and suppress light transmission in the thickness direction. The light emitting element (4) is disposed between the inner side surface (31) and the outer side surface (32) with the light emission surface (41) facing the inner side surface (31).

## Description

### Technical Field

The present disclosure generally relates to smoke detectors, and specifically, to a smoke detector including a light emitting element and a light receiving element and configured to detect smoke flowing into a detection space by receiving, with the light receiving element, light output from the light emitting element and scattered by the smoke.

### Background Art

A smoke detector is known which is configured to detect smoke entering a detection space (smoke-sensitive area) by irradiating the smoke with light from a light emitting element (light projecting element) and receiving light scattered by the smoke with a light receiving element (for example, Patent Literature 1).

The smoke detector described in Patent Literature 1 allows smoke to flow into the sensing area through a smoke inflow path formed as a gap between a plurality of labyrinth walls in a detection space surrounded by the labyrinth walls. Moreover, the labyrinth walls have an outside light shielding function of preventing outside light from entering through the smoke inflow path so that the outside light does not make a smoke sensing function unreliable. In Patent Literature 1, a smoke sensing element in which the light emitting element and the light receiving element are accommodated is substantially circularly shaped. Moreover, in Patent Literature 1, the detection space is enlarged by making rear portions (i.e., ends on an opposite side from the detection space) of the light emitting element and the light receiving element protrude.

### Citation List

### Patent Literature

Patent Literature 1: JP 2010-40009 A

### Summary of Invention

According to the configuration described in Patent Literature 1, part (the rear portion) of at least the light emitting element protrudes from an outer periphery of the smoke sensing element so as to enlarge the detection space, and therefore, the dimension of the smoke sensing element is increased by the protrusion of the light emitting element. This may interfere downsizing of the smoke sensing element as a whole.

In view of the foregoing, it is an object of the present disclosure to provide a smoke detector having a reduced size while a detection space is relatively widely secured.

A smoke detector according to one aspect of the present disclosure includes: a wall structure; a light emitting element; and a light receiving element. The wall structure surrounds a detection space when viewed from one direction orthogonal to one plane. The light emitting element has a light emission surface and is configured to emit light from the light emission surface toward the detection space. The light receiving element is disposed at a location where the light receiving element is free from incidence of direct light from the light emitting element and scattered light by smoke in the detection space is incident on the light receiving element. The wall structure has an inner side surface facing the detection space and an outer side surface facing away from the detection space on opposing sides in a thickness direction of the wall structure. The thickness direction is a direction along the one plane. The wall structure is configured to allow the smoke to pass therethrough and suppress light transmission in the thickness direction. The light emitting element is disposed between the inner side surface and the outer side surface with the light emission surface facing the inner side surface.

### Brief Description of Drawings

FIG. 1A is a plan view illustrating a detection block in state where a second case of a smoke detector according to a first embodiment is removed, and FIG. 1B is an enlarged view of area Z1 of FIG. 1A, the enlarged view illustrating a main part of the smoke detector;
FIG. 2A is a bottom perspective view illustrating the exterior of the smoke detector, and FIG. 2B is a top perspective view illustrating the exterior of the smoke detector;
FIG. 3 is an exploded bottom perspective view illustrating the smoke detector;
FIG. 4 is an exploded top perspective view illustrating the smoke detector;
FIG. 5 is a partially cutaway perspective view illustrating the smoke detector;
FIG. 6 is an exploded perspective view illustrating the detection block in the smoke detector;
FIG. 7 is a plan view illustrating the detection block in state where the second case of the smoke detector is removed;
FIG. 8 is an enlarged sectional view of area Z1 of FIG. 5, the enlarged sectional view illustrating the main part of the smoke detector;
FIG. 9 is a sectional view along line A1-A1 of FIG. 7, the sectional view illustrating the main part of the smoke detector;
FIG. 10 is a plan view illustrating a detection block in state where a second case of a smoke detector according to a second embodiment is removed;
FIG. 11 is a plan view illustrating a detection block in state where a second case of a smoke detector according to a variation of the second embodiment is removed;
FIG. 12A is a top sectional view illustrating a main part of a detection block of a smoke detector according to a third embodiment, and FIG. 12B is a sectional view illustrating the main part of the detection block according to the third embodiment; and
FIG. 13A is plan view illustrating a detection block in state where a second case of a smoke detector according to a fourth embodiment is removed, and FIG. 13B is an enlarged view of area Z1 of FIG. 13A.

### Description of Embodiments

### (First Embodiment)

### (1) Schema

A smoke detector according to the present embodiment is a disaster prevention apparatus that takes an alarm action when detecting smoke generated by a fire or the like. That is, when smoke is generated in the event of a disaster such as a fire, the smoke detector senses this smoke and takes the alarm action by, for example, outputting a warning sound or cooperating with another apparatus by a communication function. As used herein, the "disaster prevention apparatus" is an apparatus installed in a facility for the purpose of, for example, preventing disasters such as a fire, preventing the spread of damage caused by disasters, or restoring from disasters.

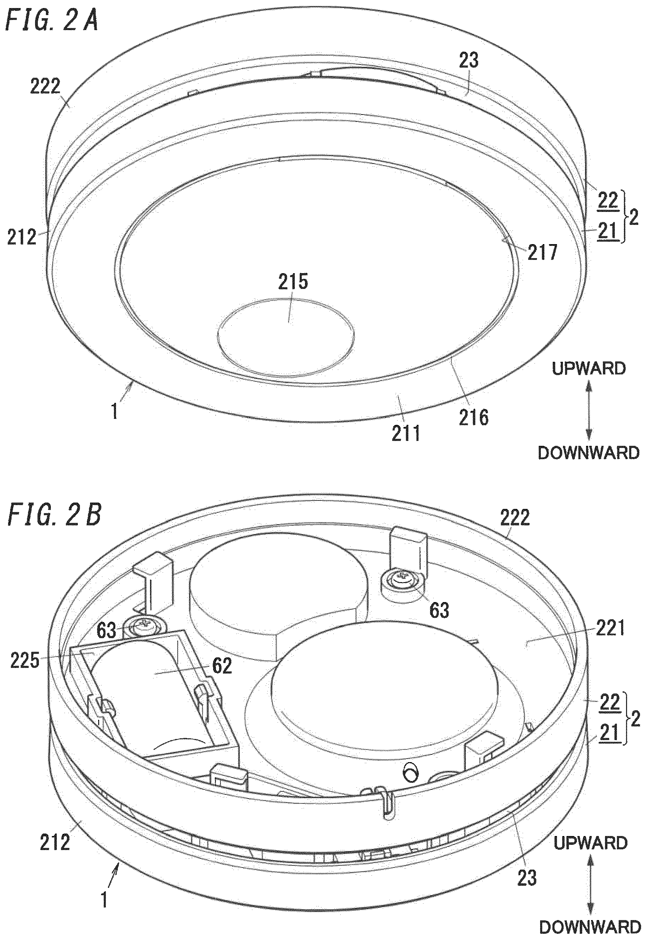

As illustrated in FIGS. 2A and 2B, the smoke detector 1 includes a housing 2 and various components accommodated in the housing 2. The smoke detector 1 is installed and used in a facility. In the present embodiment, a description is given of a smoke detector 1 used in a non-residential facility such as a hotel, an office building, a school, a welfare facility, a commercial facility, an amusement park, a hospital, or a factory, but this should not be taken as limiting. The smoke detector 1 may be used in a facility such as a multi-dwelling unit or a detached dwelling house. The smoke detector 1 is installed by being attached to, for example, a ceiling or a wall in a room, a corridor, a staircase, or the like in a facility.

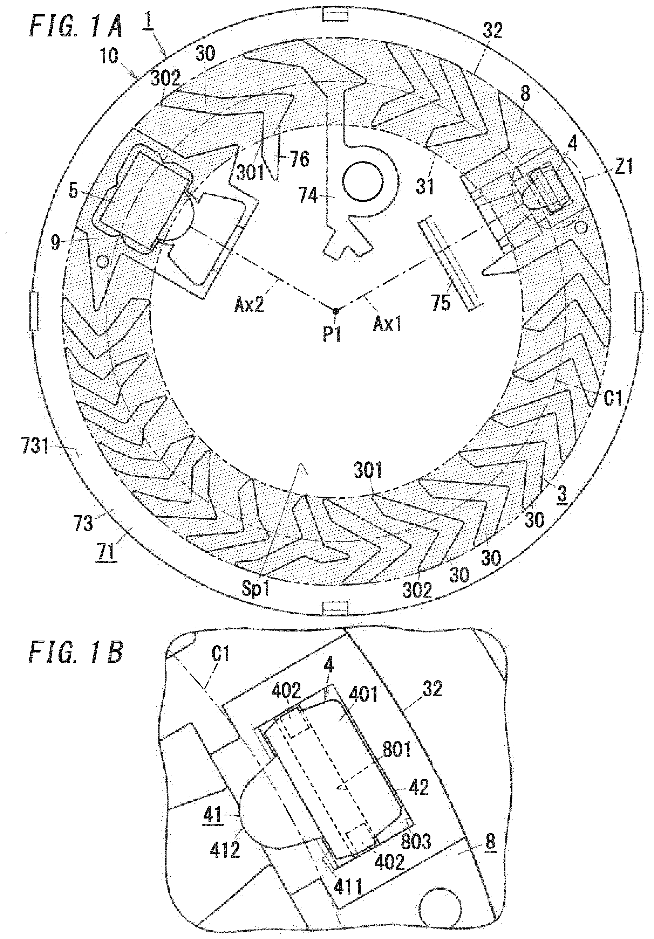

As illustrated in FIGS. 1A and 1B, the smoke detector 1 according to the present embodiment includes at least a wall structure 3, a light emitting element 4, and a light receiving element 5. The wall structure 3 surrounds a detection space Sp1 when viewed from one direction orthogonal to one plane. The light emitting element 4 has a light emission surface 41 and is configured to emit light from the light emission surface 41 toward the detection space Sp1. The light receiving element 5 is disposed at a location where direct light from the light emitting element 4 is not incident on the light receiving element 5 and scattered light by smoke in the detection space Sp1 is incident on the light receiving element 5. Thus, in a state where no smoke is present in the detection space Sp1, the light receiving element 5 does not receive the light output from the light emitting element 4, and in a state where smoke is present in the detection space Sp1, the light receiving element 5 receives the light (scattered light) which is output from the light emitting element 4 and which is scattered by the smoke. Thus, the smoke detector 1 is configured to detect smoke present in the detection space Sp1 based on a light receiving state of the light receiving element 5.

In the present embodiment, the wall structure 3 has an inner side surface 31 and an outer side surface 32 on opposing sides in a thickness direction of the wall structure 3 as shown in FIGS. 1A and 1B. The thickness direction of the wall structure 3 is a direction along the one plane. The inner side surface 31 is a surface facing the detection space Sp1, and the outer side surface 32 is a surface facing away from the detection space Sp1. The wall structure 3 allows smoke to pass therethrough and suppresses light transmission in the thickness direction. That is, the wall structure 3 has a function of taking smoke into the detection space Sp1 from the outside of the detection space Sp1 while suppressing light from entering the detection space Sp1 from the outside of the detection space Sp1.

The light emitting element 4 is disposed between the inner side surface 31 and the outer side surface 32 of the wall structure 3 with the light emission surface 41 facing the inner side surface 31. That is, the light emitting element 4 is disposed between both surfaces (the inner side surface 31 and the outer side surface 32) in the thickness direction of the wall structure 3 so as to fit within the thickness of the wall structure 3.

In this configuration, since the light emitting element 4 is fit within the thickness of the wall structure 3, it is possible to widely secure the detection space Sp1 as compared to a configuration in which the light emitting element 4 protrudes from the inner side surface 31 of the wall structure 3. Moreover, since the light emitting element 4 is fit within the thickness of the wall structure 3, it is possible to downsize the smoke detector 1 (at least a detection block 10 described later) as compared to a configuration in which the light emitting element 4 protrudes from the outer side surface 32 of the wall structure 3. According to the smoke detector 1 of the present embodiment, downsizing is possible while the detection space Sp1 is relatively widely secured.

### (2) Configuration

A configuration of the smoke detector 1 according to the present embodiment will be explained in detail below.

In the present embodiment, a description is given assuming that the smoke detector 1 is to be attached to a ceiling of a facility. In the description given below, directions perpendicular (orthogonal) to a horizontal plane in a state where the smoke detector 1 is attached to the ceiling are referred to as "upward and downward directions", and a downward direction of the upward and downward directions is referred to as a "downward direction". In the figures, arrows indicating the "upward and downward directions" are shown for the sake of explanation and are not accompanied with entity. However, these directions are not intended to limit the use direction (attachment direction) of the smoke detector 1. For example, the "downward direction" defined here may be a frontward direction (horizontal direction) in an actual installation state of the smoke detector 1.

Moreover, in the drawings described below, the configuration of the smoke detector 1 is schematically represented, and dimensional relationships and the like of components in the drawings may differ from the actual one.

### (2.1) Overall Configuration

First of all, an overall configuration of the smoke detector 1 according to the present embodiment will be described with reference to FIGS. 2A to 5.

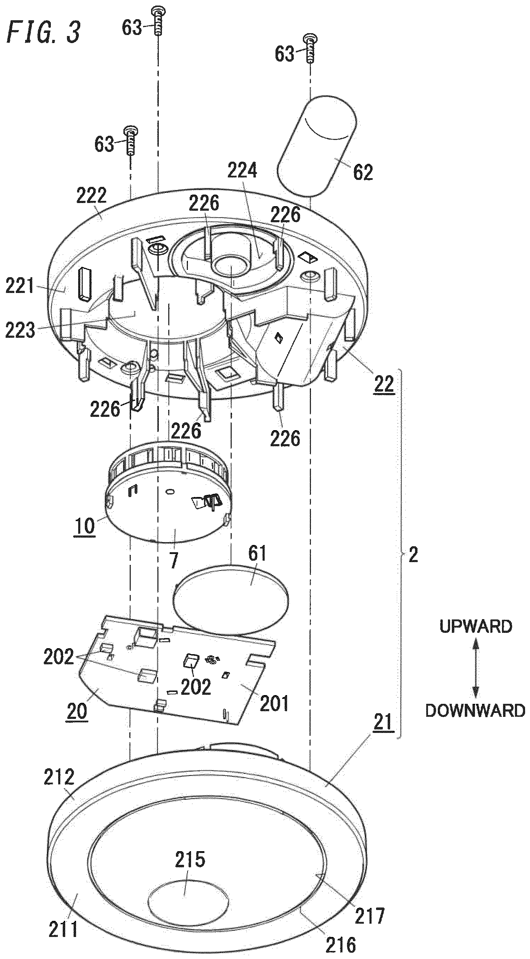

The smoke detector 1 includes the housing 2, the detection block 10 (see FIG. 3), and a circuit block 20 (see FIG. 3). Moreover, in the present embodiment, the smoke detector 1 further includes a sound outputter 61 (see FIG. 3) and a battery 62. The battery 62 does not have to be essentially included in components of the smoke detector 1, and the components of the smoke detector 1 does not have to include the battery 62.

The housing 2 is disk-shaped and has a circular shape in plan view. The housing 2 is a molded product made of a synthetic resin. The housing 2 includes a first cover 21 and a second cover 22. The first cover 21 is combined with the second cover 22 to cover a lower surface of the second cover 22. The second cover 22 is fixed to a mounting surface (a ceiling plane in the present embodiment). However, strictly speaking, the second cover 22 is not fixed directly to the mounting surface but is fixed indirectly to the mounting surface by being fixed to an attachment base fixed to the mounting surface.

Here, the first cover 21 and the second cover 22 are both formed in a disk shape and have the same outer periphery shape in plan view. For this reason, one housing 2 which is disk-shaped is formed by combining the first cover 21 and the second cover 22. The first cover 21 is coupled to the second cover 22 with a plurality of (three) screws 63. In a state where the first cover 21 and the second cover 22 are coupled to each other, the detection block 10, the circuit block 20, and the sound outputter 61 are accommodated between the first cover 21 and the second cover 22.

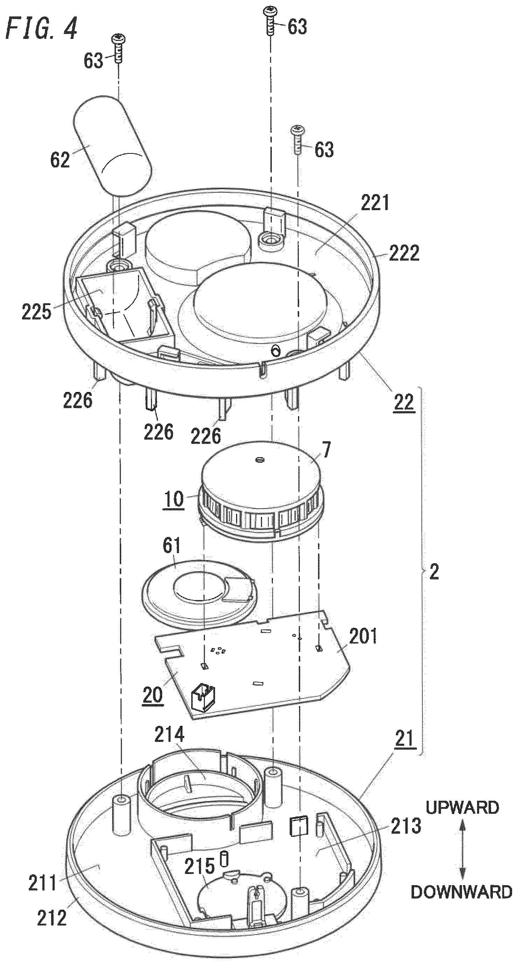

The first cover 21 has a first main board 211 having a circular shape and a first peripheral wall 212 protruding upward from an outer periphery of an upper surface of the first main board 211. The upper surface of the first main board 211 of the first cover 21 further has a circuit area 213 (see FIG. 4) in which the circuit block 20 is to be disposed and a first acoustic area 214 (see FIG. 4) in which the sound outputter 61 is to be disposed. The first cover 21 further includes a push button 215 disposed in the circuit area 213. The push button 215 is configured to be movable about a hinge structure relative to the first main board 211 and allows a pushing operation into an inner side of the housing 2, that is an upward pushing operation. A push operation given to the push button 215 operates a switch included in the circuit block 20 disposed in the circuit area 213.

The first main board 211 has a lower surface in which a groove 216 (see FIG. 2A) extending along an outer peripheral edge of the lower surface is formed. The groove 216 is substantially concentric with the outer peripheral edge of the lower surface of the first main board 211 and is formed over the entire periphery. That is, the groove 216 has an annular shape slightly smaller than the outer peripheral edge of the lower surface of the first main board 211. The groove 216 has a bottom surface having a portion corresponding to the first acoustic area 214, and in the portion, a tone hole 217 (see FIG. 2A) penetrating the first main board 211 in a plate thickness direction of the first main board 211 is formed.

The second cover 22 has a second main board 221 having a circular shape and a second peripheral wall 222 protruding upward from an outer periphery of an upper surface of the second main board 221. Moreover, the second main board 221 of the second cover 22 has a lower surface having an accommodation area 223 (see FIG. 3) in which the detection block 10 is to be disposed and a second acoustic area 224 in which the sound outputter 61 is to be disposed. The upper surface of the second main board 221 of the second cover 22 further has a battery area 225 (see FIG. 4) in which the battery 62 is to be accommodated.

Moreover, the second cover 22 further includes a plurality of spacers 226 protruding downward from the lower surface of the second main board 221. The plurality of spacers 226 secure a prescribed space between the first cover 21 and the second cover 22 with tip ends (lower ends) of the plurality of spacers 226 being in contact with the upper surface of the first main board 211. Specifically, in a state where the first cover 21 and the second cover 22 are coupled to each other, a space as an opening 23 via which the outside of the housing 2 is communicated with an internal space of the housing 2 is formed between an upper end surface of the first peripheral wall 212 and the lower surface of the second main board 221. This allows smoke to flow through the opening 23 into the internal space of the housing 2, that is, the space between the first cover 21 and the second cover 22.

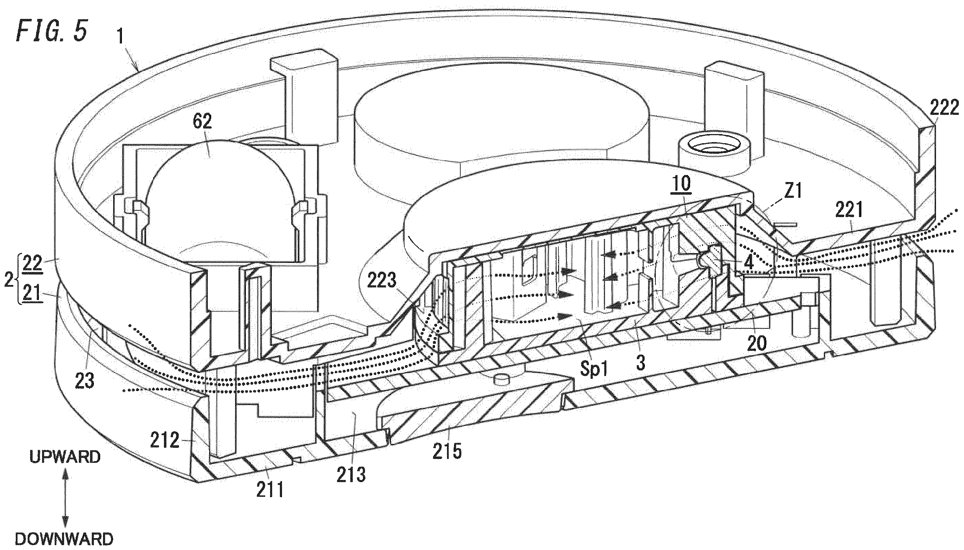

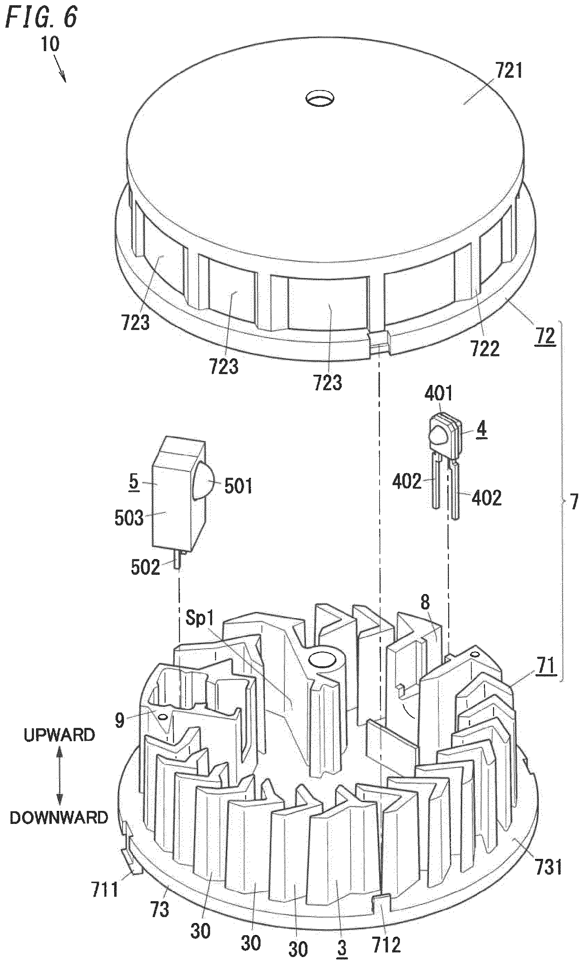

The detection block 10 includes a detection case 7, the light emitting element 4 (see FIG. 6), and the light receiving element 5 (see FIG. 6). The detection case 7 is disk-shaped and has a circular shape in plan view. The detection case 7 is a molded product made of a synthetic resin. Here, the detection case 7 has at least a light shielding property. In the present embodiment, part of the detection case 7 functions as the wall structure 3 (see FIG. 5). The wall structure 3 has a function of taking smoke into the detection space Sp1 from the outside of the detection space Sp1 while suppressing light from entering the detection space Sp1 from the outside of the detection space Sp1. The detection block 10 is disposed above the circuit block 20 in the internal space of the housing 2. The detection block 10 is configured to detect smoke present in the detection space Sp1 (see FIG. 5) in the detection case 7.

That is, as shown in FIG. 5, the detection block 10 is, together with the circuit block 20 and other components, accommodated in the internal space of the housing 2, that is, the space between the first cover 21 and the second cover 22. Since The internal space of the housing 2 is communicated with the outside of the housing 2 via the opening section 23 as described above, smoke can flow into the internal space of the housing 2 through the opening section 23. In FIG. 5, some of the smoke-inflow path are schematically indicated by dotted line arrows. Since the detection block 10 has the wall structure 3 that takes smoke into the detection space Sp1 from the outside of the detection space Sp1, the smoke that has flowed into the internal space of the housing 2 can further flow into the detection space Sp1. This allows the detection block 10 to sense smoke. The detection block 10 will be described in detail in "(2.2) Configuration of Detection Block".

The circuit block 20 includes a printed wiring board 201 and a plurality of electronic components 202 including a switch. The plurality of electronic components 202 are mounted on the printed wiring board 201. The light emitting element 4 and the light receiving element 5 of the detection block 10 are electrically connected to a conductor section of the printed wiring board 201. The sound outputter 61 and the battery 62 are further electrically connected to the conductor section of the printed wiring board 201. In the present embodiment, the printed wiring board 201 is disposed below the detection block 10, that is, between the detection block 10 and the first main board 211. The detection block 10 is mounted on one surface (upper surface) in a plate thickness direction of the printed wiring board 201.

Here, the circuit block 20 includes a control circuit including the plurality of electronic components 202. The control circuit is a circuit for controlling the light emitting element 4, the light receiving element 5, the sound outputter 61, and other components, drives at least the light emitting element 4, and executes signal processing on an output signal of the light receiving element 5. In the signal processing, the circuit block 20 performs a comparison of the amount of light received by the light receiving element 5 (magnitude of the output signal) with a threshold to determine the presence or absence of smoke in the detection space Sp1. The amount of light received by the light receiving element 5 varies depending on, for example, the concentration of smoke in the detection space Sp1 and the type of the smoke (white smoke, black smoke, etc.). Therefore, when as a result of the comparison with the threshold, the concentration of smoke present in the detection space Sp1 is higher than a prescribed concentration, the circuit block 20 determines that "smoke is present". When detecting the presence of smoke, the circuit block 20 outputs an electric signal for driving the sound outputter 61 to the sound outputter 61.

The sound outputter 61 receives the electric signal from the circuit block 20 and outputs a sound (sonic wave). The sound outputter 61 is realized by, for example, a loudspeaker or a buzzer for converting an electric signal into sound. The sound outputter 61 is disk-shaped and has a circular shape in plan view.

The battery 62 is accommodated in the battery area 225 above the second cover 22. The battery 62 may be either a primary battery or a secondary battery.

The smoke detector 1 according to the present embodiment having the above-described configuration is included in components of, for example, an automatic fire alarm system. In addition to the smoke detector 1, the automatic fire alarm system includes, for example, a receiver for receiving a notification signal (fire signal) from the smoke detector 1 and a transmitter having a push button to which an operation is given by a person who found a fire. In the automatic fire alarm system, for example, when the smoke detector 1 senses the occurrence of (smoke due to) a fire, the smoke detector 1 transmits the notification signal (fire signal) that notifies the receiver of the occurrence of the fire.

### (2.2) Configuration of Detection Block

Next, a more detailed description of the configuration of the detection block 10 will now be given with reference to FIGS. 6 to 9, and FIGS. 1A and 1B. Note that each figure described below is a schematic view, and the ratio of length or size of each component in the figure does not necessarily reflect actual dimensional ratio.

As described above, the detection block 10 includes the detection case 7, the light emitting element 4, and the light receiving element 5, and part of the detection case 7 serves as the wall structure 3. The detection space Sp1 is formed in the detection case 7. Moreover, the detection case 7 includes a light emitting element holder 8 for holding the light emitting element 4. Furthermore, the detection case 7 includes a light receiving element holder 9 for holding the light receiving element 5. That is, the smoke detector 1 according to the present embodiment includes the light emitting element holder 8 and the light receiving element holder 9.

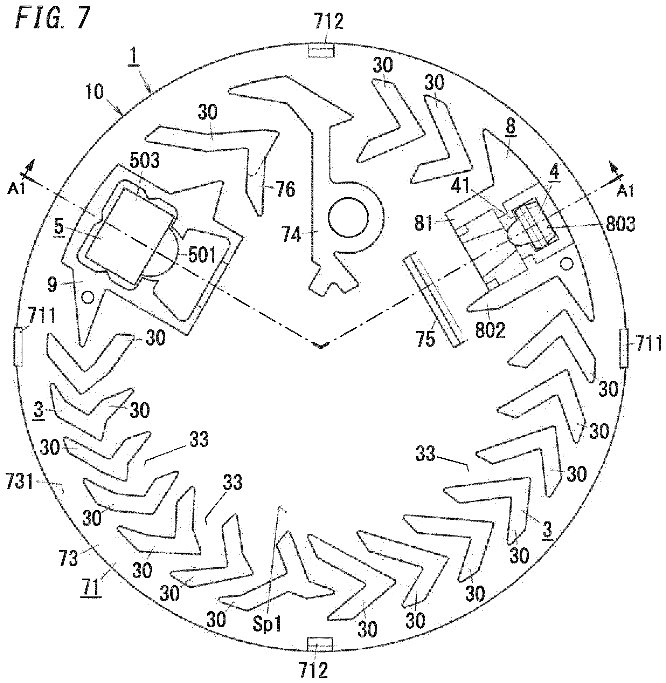

In the present embodiment, as shown in FIG. 6, the detection case 7 includes a first case 71 and a second case 72. The second case 72 is combined with the first case 71 to cover an upper surface of the first case 71. The first case 71 is fixed to the printed wiring board 201 (see FIG. 3). The first case 71 has a pair of claws 711 (see FIG. 7) for fixing the first case 71 to the printed wiring board 201. The pair of claws 711 protrude downward from an outer periphery of a lower surface of the first case 71 and is to be hooked to a peripheral edge of a hole formed in the printed wiring board 201, thereby fixing the first case 71 to the printed wiring board 201. In other words, the first case 71 is mechanically coupled to the printed wiring board 201 by a snap fit method.

Here, the first case 71 and the second case 72 are both formed in a circular shape in plan view and have substantially the same outer peripheral shape in plan view. Thus, the first case 71 and the second case 72 are combined with each other, thereby forming one detection case 7 having a disk shape. The first case 71 has a pair of claws 712 (see FIG. 7) for coupling the first case 71 to the second case 72. The pair of claws 712 protrude upward from an outer periphery of the upper surface of the first case 71 and is to be hooked to an outer peripheral surface of the second case 72, thereby coupling the first case 71 to the second case 72. In other words, the first case 71 and the second case 72 are mechanically coupled to each other by a snap fit method. The detection space Sp1 is formed between the first case 71 and the second case 72 in a state where the first case 71 and the second case 72 are coupled to each other.

The first case 71 has a bottom plate 73 having a circular shape and the wall structure 3 protruding upward from an outer periphery of an upper surface 731 of the bottom plate 73. The upper surface 731 of the bottom plate 73 constitutes a bottom surface of the detection space Sp1. Moreover, the first case 71 further includes a first holder 81 forming part of the light emitting element holder 8 and the light receiving element holder 9. Moreover, the first case 71 further includes a light shielding wall 74 (see FIG. 7), a light shielding rib 75 (see FIG. 7), and a supplementary light shielding wall 76 (see FIG. 7) which will be described later. Each of the first holder 81, the light receiving element holder 9, the light shielding wall 74, the light shielding rib 75, and the supplementary light shielding wall 76 protrudes upward from the upper surface 731 of the bottom plate 73. Here, the protrusion amount of each of the light emitting element holder 8, the light receiving element holder 9, the light shielding wall 74, and the supplementary light shielding wall 76 from the upper surface 731 of the bottom plate 73 is substantially the same as the protrusion amount of the wall structure 3 from the upper surface 731 of the bottom plate 73.

The second case 72 has an upper board 721 having a circular shape and a peripheral wall 722 protruding downward from an outer periphery of a lower surface of the upper board 721. The inner diameter of the peripheral wall 722 is greater than the outer diameter of the wall structure 3. The protrusion amount of the peripheral wall 722 from the lower surface of the upper board 721 is substantially the same as the protrusion amount of the wall structure 3 from the upper surface 731 of the bottom plate 73. Thus, in a state where the first case 71 and the second case 72 are coupled to each other, a tip end surface (a lower end face) of the peripheral wall 722 is in contact with the upper surface 731 of the bottom plate 73, and a tip end surface (an upper end surface) of the wall structure 3 is in contact with the lower surface of the upper board 721. In this state, the wall structure 3 is to be fit in a space surrounded by the peripheral wall 722.

The peripheral wall 722 has a plurality of window holes 723 penetrating the peripheral wall 722 in a plate thickness direction of the peripheral wall 722. The plurality of window holes 723 are aligned along a peripheral direction of the lower surface of the upper board 721. Thus, the wall structure 3 is exposed to the outside of the detection case 7 through the plurality of window holes 723 in a state where the first case 71 and the second case 72 are coupled to each other. Here, an insect screen may be attached to the peripheral wall 722 so as to cover the plurality of window holes 723. The insect screen reduces the entry of foreign substances, such as insects, from the plurality of window holes 723 into the detection space Sp1 in the detection case 7.

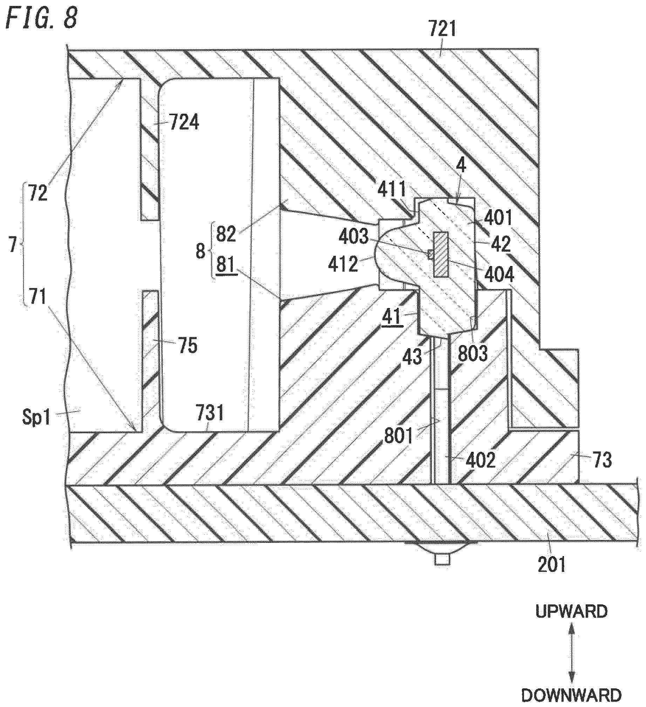

Moreover, the second case 72 further includes a second holder 82 (see FIG. 8) which is part of the light emitting element holder 8. The second holder 82, together with the first holder 81, constitutes the light emitting element holder 8. In other words, the light emitting element holder 8 is divided into two members, namely, the first holder 81 provided in the first case 71 and the second holder 82 provided in the second case 72. Moreover, the second case 72 further includes a counter rib 724 (see FIG. 8) at a location which is on the lower surface of the upper board 721 and at which the counter rib 724 faces the light shielding rib 75.

As illustrated in FIG. 1A, the wall structure 3 surrounds the detection space Sp1 when viewed from one direction (above) orthogonal to the upper surface 731 (one plane) of the bottom plate 73. FIG. 1A is a plan view illustrating the detection block 10, where the second case 72 is detached, that is, the second case 72 is omitted. In the present embodiment, the detection space Sp1 having a circular shape in plan view is formed above the upper surface 731 of the bottom plate 73. The wall structure 3 is formed in a toroidal shape in plan view so as to surround the entire periphery of the detection space Sp1. In other words, at an outer periphery of the upper surface 731 of the bottom plate 73, the wall structure 3 having a toroidal shape is formed along an outer peripheral edge of the upper surface 731. In a state where the first case 71 and the second case 72 are coupled to each other, a space located between the bottom plate 73 and the upper board 721 and surrounded by the wall structure 3 is the detection space Sp1. That is, the detection space Sp1 is separated by the wall structure 3 from a space surrounding the detection space Sp1.

In this embodiment, the wall structure 3 has the inner side surface 31 facing the detection space Sp1 and the outer side surface 32 facing away from the detection space Sp1 on opposing sides in the thickness direction of the wall structure 3. The wall structure 3 allows smoke to pass therethrough and suppresses light transmission in the thickness direction. That is, the wall structure 3 is a structure body having a prescribed thickness in plan view and has the inner side surface 31 and the outer side surface 32 on the opposing sides in the thickness direction. In the present embodiment, in the wall structure 3, the thickness direction of the wall structure 3 is a radial direction of the upper surface 731 of the bottom plate 73, that is, a direction along the upper surface 731 (one surface) of the bottom plate 73 and from an environment surrounding the detection space Sp1 toward the center of the detection space Sp1. The wall structure 3 has a function of suppressing transmission of light while allowing smoke to pass through a space between the inner side surface 31 and the outer side surface 32. This enables the wall structure 3 to take smoke into the detection space Sp1 from the outside of the detection space Sp1 while suppressing light from entering the detection space Sp1 from the outside of the detection space Sp1. In the present embodiment, the thickness of the wall structure 3 is substantially uniform over the entire periphery, and in plan view, the outer peripheral edge of the upper surface 731, the inner side surface 31, and the outer side surface 32 are substantially concentric.

In order to realize the function described above, the wall structure 3 having such a structure has a plurality of smoke passage holes 33 penetrating the wall structure 3 in the thickness direction, that is, extending from the inner side surface 31 through the outer side surface 32. The plurality of smoke passage holes 33 are aligned along a peripheral direction of the wall structure 3. Thus, the wall structure 3 allows smoke to pass through the smoke passage holes 33 and allows the smoke to be taken into the detection space Sp1 from the outside of the detection space Sp1. Here, in plan view, each smoke passage hole 33 does not have a shape extending straightly from the inner side surface 31 through the outer side surface 32 but has a at least partially bent shape between the inner side surface 31 and the outer side surface 32. That is, each smoke passage hole 33 has a shape that is at least partially curved or bent so that the detection space Sp1 surrounded by the wall structure 3 cannot be seen through each smoke passage hole 33 from a side facing the outer side surface 32 of the wall structure 3. As a result, for the wall structure 3, it is suppressed that light passes through the smoke passage holes 33 to be transmitted through the wall structure 3, and thus, it is possible to suppress the light from entering the detection space Sp1 from the outside of the detection space Sp1. However, the entire periphery of each smoke passage hole 33 does not have to be surrounded by the wall structure 3. For example, the wall structure 3 does not have to be present on both sides in the upward/downward directions of each smoke passage hole 33. Moreover, an opening of each smoke passage holes 33 at the inner side surface 31 and an opening of each smoke passage holes 33 at the outer side surface 32 do not have to be arranged on the radius of the detection space Sp1, that is, on a straight line extending radially from a center point PI of the detection space Sp1 in plan view.

Specifically, the wall structure 3 is a collection of a plurality of pieces 30 aligned along the inner side surface 31. The wall structure 3 allows smoke to pass between the plurality of pieces 30. In other words, at the outer periphery of the upper surface 731 of the bottom plate 73, the plurality of pieces 30 are arranged at intervals along the outer peripheral edge of the upper surface 731. The plurality of pieces 30 protrude from the upper surface 731 of the bottom plate 73 to form one wall structure 3. The protrusion amounts of the plurality of pieces 30 from the upper surface 731 are substantially equal. The wall structure 3 has the smoke passage holes 33 each located between a corresponding pair of adjacent pieces 30 of the plurality of pieces 30. Therefore, no pieces 30 constituting the wall structure 3 are provided on both sides in the upward and downward directions of each smoke passage hole 33.

The inner side surface 31 is a surface passing through end edges 301 of the plurality of pieces 30 facing the detection space Sp1. The outer side surface 32 is a surface passing through end edges 302 of plurality of pieces 30 facing away from the detection space Sp1. In sum, a smooth curved surface, a flat surface, or a combination of a flat surface and a curved surface connecting the end edges 301 of the plurality of pieces 30 facing the detection space Sp1 corresponds to the inner side surface 31. In a similar manner, a smooth curved surface, a flat surface, or a combination of a flat surface and a curved surface connecting the end edges 302 of the plurality of pieces 30 facing away from the detection space Sp1 corresponds to the outer side surface 32.

In other words, the end edges 301 of the plurality of pieces 30 facing the detection space Sp1 are located on the inner side surface 31, and the end edges 302 of the plurality of pieces 30 facing away from the detection space Sp1 are located on the outer side surface 32. Of the plurality of pieces 30, a piece 30 continuous with the supplementary light shielding wall 76 described later also has an end edge 301 facing the detection space Sp1 and located on the inner side surface 31 in a similar manner to the other pieces 30, and the end edges 302 of the plurality of pieces 30 facing away from the detection space Sp1 are located on the outer side surface 32. Thus, each of the inner side surface 31 and the outer side surface 32 in the present embodiment is not a surface having an entity but is a virtual surface whose shape is defined by the plurality of pieces 30. Therefore, in FIGS. 1A and 1B, the inner side surface 31 and the outer side surface 32 are represented by imaginary lines (long dashed double-short dashed lines). Moreover, in FIG. 1A, an area corresponding to the wall structure 3 is shaded (dot-hatched).

It is, however, not essential for all of the plurality of pieces 30 that the locations of the end edges 301 exactly coincide with the location of the inner side surface 31. The locations of the end edges 301 of some of the pieces 30 at least substantially coincide with the location of the inner side surface 31. Also in the example shown in FIG. 1A, the locations of the end edges 301 facing the detection space Sp1 and belonging to a majority of pieces 30 of the plurality of pieces 30 exactly coincide with the location of the inner side surface 31, but the locations of the end edges 301 belonging to the remaining pieces 30 are located in the vicinity of the inner side surface 31 but do not exactly coincide with the location of the inner side surface 31. Thus, the inner side surface 31 is defined by the locations of the end edges 301 of the majority of pieces 30 of the plurality of pieces 30, and the end edges 301 of the remaining pieces 30 are at least located in the vicinity of the inner side surface 31. The same applies to the outer side surface 32. It is not essential for all of the plurality of pieces 30 that the locations of the end edges 302 exactly coincide with the location of the outer side surface 32. The locations of the end edges 302 of some of the plurality of pieces 30 at least substantially coincide with the location of the outer side surface 32. That is, the outer side surface 32 is defined by the locations of the end edges 302 of the majority of pieces 30 of the plurality of pieces 30, and the end edges 302 of the remaining pieces 30 are at least located in the vicinity of the outer side surface 32. As used herein "in the vicinity" refers to a range of about 20% of the thickness of the wall structure 3 as seen from the inner side surface 31 or the outer side surface 32.

In the present embodiment, the outer side surface 32 is substantially parallel to the outer peripheral edge of the upper surface 731 of the bottom plate 73 in plan view, that is, the distance from the outer peripheral edge of the upper surface 731 to the outer side surface 32 is uniform over the entire periphery. Moreover, as shown in FIG. 1A, the inner side surface 31 is formed at a location which is located between the center point PI of the detection space Sp1 and the outer side surface 32 and which is closer to the outer side surface 32 than to the center point PI. In other words, when a virtual circle which is substantially concentric with the outer side surface 32 in plan view and whose radius is 1/2 of the radius of the outer side surface 32 is drawn, the inner side surface 31 is located between the virtual circle and the outer side surface 32. However, the shape and the arrangement of each of the inner side surface 31 and the outer side surface 32 are mere examples. Other shape and arrangement of each of the inner side surface 31 and the outer side surface 32 may be adopted.

Here, each of the plurality of pieces 30 has a bent part between the end edge 301 facing the detection space Sp1 and the end edge 302 facing away from the detection space Sp1 in plan view. In the present embodiment, each of the plurality of pieces 30 is substantially L-shaped, substantially V-shaped, or substantially Y-shaped in plan view. With such a shape, each smoke passage hole 33 formed between a corresponding pair of adjacent pieces 30, as described above, has at least a curved part between the inner side surface 31 and the outer side surface 32 in plan view. Thus, the wall structure 3 realizes a function of allowing the smoke to pass therethrough and suppressing light transmission in the thickness direction.

The light emitting element 4 has the light emission surface 41 (see FIG. 7), and when energized, the light emitting element 4 outputs light from the light emission surface 41. In the present embodiment, for example, the light emitting element 4 is a light emitting diode (LED). As shown in FIG. 6, the light emitting element 4 has a body section 401. The body section 401 has a surface from which a pair of lead terminals 402 protrude. Here, the pair of lead terminals 402 are electrically connected to the body section 401 of the light emitting element 4. Electrically connecting the pair of lead terminals 402 to the printed wiring board 201 supplies electric power to the light emitting element 4 from the circuit block 20, so that the light emitting element 4 emits light. In the present embodiment, a description is given assuming that the pair of lead terminals 402 are not included in components of the light emitting element 4, but the pair of lead terminals 402 may be included in the components of the light emitting element 4.

Here, the light emitting element 4 is disposed between the inner side surface 31 and the outer side surface 32 of the wall structure 3 as shown in FIG. 1A. In other words, the body section 401 of the light emitting element 4 is disposed so as to fit between the inner side surface 31 and the outer side surface 32 which are opposing end surfaces in the thickness direction of the wall structure 3. Moreover, the light emitting element 4 is disposed with the light emission surface 41 facing the inner side surface 31, that is, facing the detection space Sp1. Thus, the light emitting element 4 is configured to output light from the light emission surface 41 toward the detection space Sp1 without using an optical element such as a mirror.

As illustrated in FIG. 8, in the present embodiment, the light emitting element 4 further includes a rear surface 42 facing the outer side surface 32 and a bottom surface 43 connecting the light emission surface 41 to the rear surface 42. FIG. 8 is an enlarged sectional view of area Z1 of FIG. 5. A pair of lead wires electrically connected to the light emitting element 4 protrude from the bottom surface 43. In the present embodiment, the lead wires protruding from the bottom surface 43 are lead terminals 402. In other words, the light emitting element 4 has the light emission surface 41 and the rear surface 42 on opposing sides of the body section 401 in the thickness direction of the wall structure 3. The lead terminals 402 protrude neither from the light emission surface 41 nor the rear surface 42, but the lead terminals 402 protrude from the bottom surface 43 adjacent to both the light emission surface 41 and the rear surface 42. That is, the light emitting element 4 is a so-called side view type light emitting diode that laterally outputs light when the surface (the bottom surface 43) from which the lead terminals 402 protrude is directed downward.

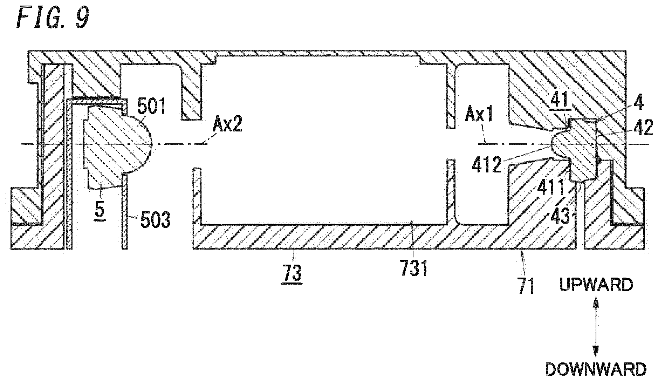

Moreover, in the present embodiment, the lead wires (the lead terminals 402) protrude from the light emitting element 4 in a direction orthogonal to an optical axis Ax1 (see FIG. 9) of the light emitting element 4 (downward in the present embodiment). That is, the lead terminals 402 protrude downward from the bottom surface 43 as described above, and it is possible to draw the lead terminals 402 downward from the light emitting element 4 without employing a bent structure in parts of the lead terminals 402.

It is possible to reduce, in the thickness direction of the wall structure 3, a space occupied by the light emitting element 4 having such a configuration as compared with a light emitting element having a lead terminal protruding from a surface opposite to a light emission surface, for example, as in the case of a so-called lamp-type light emitting diode. That is, in the side-view type light emitting diode, the lead terminals 402 protruding from the bottom surface 43 can be drawn, in a direction orthogonal to the thickness direction of the wall structure 3, out of the light emitting element 4 with the light emission surface 41 facing the inner side surface 31. Thus, while the dimension of the wall structure 3 in the thickness direction is kept relatively small, it is possible to dispose the light emitting element 4 between the inner side surface 31 and the outer side surface 32 of the wall structure 3 with the light emission surface 41 facing the inner side surface 31 as described above.

Here, the bottom surface 43 is along the upper surface 731 (one plane) of the bottom plate 73. In the present embodiment, the bottom surface 43 is not parallel to the upper surface 731 of the bottom plate 73 but is tilted relative to the upper surface 731. However, the bottom surface 43 is at least along the upper surface 731 of the bottom plate 73. The bottom surface 43 may be substantially parallel to the upper surface 731.

More specifically, the light emission surface 41 includes a planar part 411 and a projection 412. The planar part 411 is a plane substantially parallel to the rear surface 42. The projection 412 protrudes from the planar part 411 to form a dome-like shape and functions as a convex lens. As illustrated in FIG. 8, the body section 401 includes a light emitting part 403 and a lead part 404. The light emitting part 403 is mounted on a surface of the lead part 404, the surface facing the outer side surface 32. The light emitting part 403 emits light when energized. The lead part 404 is configured integrally with the lead terminal 402.

The light receiving element 5 is an element that performs photoelectric conversion of converting light into an electric signal. In the present embodiment, for example, the light receiving element 5 is a photodiode (PD). As illustrated in FIG. 6, the light receiving element 5 has a body section 501, a pair of lead terminals 502, and a metal cover 503. The body section 501 is accommodated in the metal cover 503 such that at least a light receiving surface of the body section 501 is exposed from a hole formed in the metal cover 503. The pair of lead terminals 502 protrude from a lower surface of the body section 501. Here, the pair of lead terminals 502 are electrically connected to the body section 501 of the light receiving element 5. Electrically connecting the pair of lead terminals 502 to the printed wiring board 201 electrically connects the light receiving element 5 to the circuit block 20.

Here, the light receiving element 5 is disposed at a location where direct light from the light emitting element 4 is not incident on the light receiving element 5 and scattered light by smoke in the detection space Sp1 is incident on the light receiving element 5. Specifically, the light receiving element 5 is disposed with the light receiving surface of the body section 501 facing the detection space Sp1. That is, both the light emitting element 4 and the light receiving element 5 are disposed to face the detection space Sp1. However, as illustrated in FIG. 7, the light shielding wall 74 is disposed on a straight line connecting the light emitting element 4 to the light receiving element 5 in plan view. The light shielding wall 74 has a function of shielding direct light from the light emitting element 4 to the light receiving element 5. In the present embodiment, the light shielding wall 74 is formed in a shape that is contiguous with one of the plurality of pieces 30 forming the wall structure 3. FIG. 7 is a plan view illustrating the detection block 10, where the second case 72 is detached, that is, the second case 72 is omitted.

As illustrated in FIG. 1A, the light emitting element 4 and the light receiving element 5 are arranged in such a positional relationship that the optical axis Ax1 of the light emitting element 4 and an optical axis Ax2 of the light receiving element 5 intersect each other in plan view. In the example illustrated in FIG. 1A, the optical axis Ax1 of the light emitting element 4 and the optical axis Ax2 of the light receiving element 5 intersect each other at the center point PI of the detection space Sp1 having a circular shape in plan view. When the light emitting element 4 and the light receiving element 5 are in the positional relationship as described above, the direct light from the light emitting element 4 is not incident on the light receiving element 5. On the other hand, when smoke flows into the detection space Sp1, the light from the light emitting element 4 is scattered by the smoke existing at the center point PI of the detection space Sp1, and at least part of the scattered light is received by the light receiving element 5.

Thus, in a state where no smoke is present in the detection space Sp1, the light receiving element 5 does not receive the light output from the light emitting element 4, and in a state where smoke is present in the detection space Sp1, the light receiving element 5 receives the light (scattered light) which is output from the light emitting element 4 and which is scattered by the smoke. Thus, the smoke detector 1 is configured to detect smoke present in the detection space Sp1 based on a light receiving state of the light receiving element 5.

Here, in the present embodiment, since the light emitting element 4 is fit within the thickness of the wall structure 3 as described above, it is possible to widely secure the detection space Sp1 as compared to a configuration in which the light emitting element 4 protrudes from the inner side surface 31 of the wall structure 3. When the detection space Sp1 is enlarged, the flexibility of the arrangement of the light shielding wall 74 in the detection space Sp1 increases. Moreover, when the detection space Sp1 is enlarged, the light shielding wall 74 can be arranged at a location relatively far from the center point P1 of the detection space Sp1.

Moreover, in the present embodiment, the optical axis Ax1 of the light emitting element 4 and the optical axis Ax2 of the light receiving element 5 are along the upper surface 731 (one plane) of the bottom plate 73 as illustrated in FIG. 9. FIG. 9 is a sectional view along line A1-A1 of FIG. 7. In the example illustrated in FIG. 9, the optical axis Ax1 of the light emitting element 4 and the optical axis Ax2 of the light receiving element 5 are both substantially parallel to the upper surface 731 of the bottom plate 73. The optical axis Ax1 of the light emitting element 4 and the optical axis Ax2 of the light receiving element 5 are in the same plane. In other words, the optical axis Ax1 of the light emitting element 4 and the optical axis Ax2 of the light receiving element 5 are located at substantially the same height from the upper surface 731 of the bottom plate 73.

Moreover, the light shielding rib 75 is disposed at a location where the light shielding rib 75 faces a front surface of the light emitting element 4, that is, the light emission surface 41 of the light emitting element 4 in plan view. As illustrated in FIG. 8, a constant gap is formed between the light shielding rib 75 and the counter rib 724 provided to the second case 72. The optical axis Ax1 of the light emitting element 4 extends through the gap between the light shielding rib 75 and the counter rib 724. Thus, the light shielding rib 75 and the counter rib 724 suppress the light output from the light emitting element 4 from spreading upward and downward. As a result, the light output from the light emitting element 4 is suppressed from being reflected off the lower surface of the upper surface 731 of the bottom plate 73 or the lower surface of the upper board 721.

Moreover, the supplementary light shielding wall 76 has a shape continuous with one piece 30 which is located between the light shielding wall 74 and the light receiving element holder 9 and which is one of the plurality of pieces 30 forming the wall structure 3. The supplementary light shielding wall 76 protrudes from the inner side surface 31 of the wall structure 3 into the detection space Sp1. The supplementary light shielding wall 76 has a function of: suppressing the generation of stray light in the interior of the detection space Sp1 due to reflection of light off the upper surface 731 of the bottom plate 73, the lower surface of the upper board 721, or the like; and improving the inflow of smoke into the detection space Sp1. That is, the supplementary light shielding wall 76 is a structure different from the piece 30, which is part of the wall structure 3 for suppressing light from entering the detection space Sp1 from the outside of the detection space Sp1. In FIG. 7, the border between the supplementary light shielding wall 76 and the piece 30 is shown by an imaginary line (long dashed double-short dashed line).

The light emitting element holder 8 is divided into two members, namely, the first holder 81 provided in the first case 71 and the second holder 82 provided in the second case 72 as described above and holds the light emitting element 4. Here, at least part of the light emitting element holder 8 is disposed between the inner side surface 31 and the outer side surface 32 as shown in FIG. 1A. Specifically, the first holder 81 is disposed between the plurality of pieces 30 constituting the wall structure 3 such that large part of the first holder 81 is fit between the inner side surface 31 and the outer side surface 32. The first holder 81 has a recess into which the light emitting element 4 fits.

Moreover, in the present embodiment, the light emitting element holder 8 is disposed to fit in an area surrounded by the outer side surface 32. That is, the light emitting element holder 8 (including the first holder 81) does not protrude from the outer side surface 32 but has a shape that fits in the area surrounded by the outer side surface 32.

Moreover, the light emitting element holder 8 has a wire passing hole 801 which lead wires to be electrically connected to the light emitting element 4 are to pass through. In the present embodiment, the lead wires passing through the wire passing hole 801 are the lead terminals 402. The wire passing hole 801 is formed in the first holder 81. As shown in FIG. 1B, the wire passing hole 801 is formed at a location which is located between the inner side surface 31 and the outer side surface 32 and which is closer to the outer side surface 32 than to the inner side surface 31. In other words, as illustrated in FIG. 1A, when a centerline C1 for bisecting the wall structure 3 in the thickness direction is drawn in plan view, the wire passing hole 801 is located between the centerline C1 and the outer side surface 32.

Moreover, the light emitting element holder 8 further includes a light shielding piece 802 as illustrated in FIG. 7. The light shielding piece 802 protrudes into the detection space Sp1 from a surface of the first holder 81 facing the detection space Sp1. Here, the light shielding piece 802 protrudes from an end of the first holder 81 away from the light shielding wall 74 in the peripheral direction of the wall structure 3. The light shielding piece 802 includes a function of shielding the light output from the light emitting element 4 and reflected off a surface of the light emitting element holder 8.

Moreover, as illustrated in FIG. 8, the light emitting element holder 8 further includes a positioning surface 803. The positioning surface 803 is a surface intersecting the optical axis Ax1 of the light emitting element 4 and comes into contact with the light emitting element 4 from the side facing the outer side surface 32 to position the light emitting element 4. That is, the positioning surface 803 comes into contact with the rear surface 42 of the light emitting element 4 and performs positioning of the light emitting element 4 in the thickness direction of the wall structure 3. In the present embodiment, since the light emitting element holder 8 is divided into two members, namely, the first holder 81 and the second holder 82 as described above, the positioning surface 803 is also formed to extend over the two members, namely, the first holder 81 and the second holder 82.

Moreover, in the present embodiment, the positioning surface 803 has elasticity, namely, a spring characteristic. The positioning surface 803 applies, to the light emitting element 4, resilient force that pushes the light emitting element 4 from the side facing the outer side surface 32. In the present embodiment, since the light emitting element holder 8 is made of a synthetic resin, at least the second holder 82 functions as a resin spring, thereby imparting the resilience to the positioning surface 803.

The light receiving element holder 9 holds the light receiving element 5. Here, at least part of the light receiving element holder 9 is disposed between the inner side surface 31 and the outer side surface 32 as shown in FIG. 1A. Specifically, the light receiving element holder 9 is disposed between the plurality of pieces 30 constituting the wall structure 3 such that large part of the light receiving element holder 9 is fit between the inner side surface 31 and the outer side surface 32. The light receiving element holder 9 has a recess into which the light receiving element 5 fits.

### (3) Variation

The smoke detector 1 according to the first embodiment is merely an example of various embodiments of the present disclosure. Various modifications may be made to the smoke detector 1 according to the first embodiment depending on design and the like as long as the object of the present disclosure can be achieved. Variations of the first embodiment will be described below. Note that any of the variations to be described below may be combined as appropriate.

In the first embodiment, the wall structure 3 is constituted by a collection of the plurality of pieces 30, but the wall structure 3 is not limited to this configuration. The wall structure 3 may be an integral "wall" that is contiguous in the peripheral direction. Also in this case, the wall structure 3 has a plurality of smoke passage holes 33 penetrating the wall structure 3 in the thickness direction, and therefore, a function of allowing smoke to pass therethrough and suppressing light transmission in the thickness direction is realizable.

Moreover, in the first embodiment, the detection block 10 is accommodated in the internal space of the housing 2, but this should not be construed as limiting. For example, at least a part of the detection block 10 may protrude from the housing 2. Furthermore, the housing 2 is not an essential component for the smoke detector 1 and may accordingly be omitted.

Moreover, in the first embodiment, although the detection case 7 and the detection space Sp1 have been described as being circular in plan view, the present invention is not limited to this configuration, and the detection case 7 or the detection space Sp1 may have an elliptical or polygonal shape in plan view. In this case, the wall structure 3 also has an elliptical or polygonal shape in plan view.

Moreover, in the first embodiment, part of the light emitting element holder 8 is disposed to protrude from the inner side surface 31 of the wall structure 3 into the detection space Sp1, but the configuration of the light emitting element holder 8 is not limited to this configuration. The light emitting element holder 8 may be entirely fit between the inner side surface 31 and the outer side surface 32. Similarly, the light receiving element holder 9 may also be fit between the inner side surface 31 and the outer side surface 32.

Moreover, in the first embodiment, the plurality of pieces 30 are integrally formed with the bottom plate 73 so as to protrude from the upper surface 731 of the bottom plate 73, but this should not be construed as limiting. The pieces 30 may be separate from the bottom plate 73. For example, the plurality of pieces 30 may be fixed to the bottom plate 73 by adhesion, fitting, or the like. In this case, the plurality of pieces 30 are present separately from each other, but even in such a case, the plurality of pieces 30 constitute one wall structure 3.

Moreover, the light emitting element 4 is not limited to the light emitting diode but may be an organic electro-luminescence (EL) element, a laser diode (LD), or the like. The light receiving element 5 is not limited to the photodiode but may be a phototransistor or the like.

Moreover, the lead wires protruding from the bottom surface 43 or the lead wires passing through the wire passing hole 801 formed in the light emitting element holder 8 are at least lead wires electrically connectable to the light emitting element 4, are not limited to the lead terminals 402, and may be, for example, electric wires electrically connected to the lead terminals 402.

Moreover, the configuration of the pair of lead terminals 402 is not limited to a configuration protruding from the bottom surface 43. The pair of lead terminals 402 may protrude from a surface, such as the light emission surface 41 or the rear surface 42, other than the bottom surface 43 of the body section 401.

### (Second Embodiment)

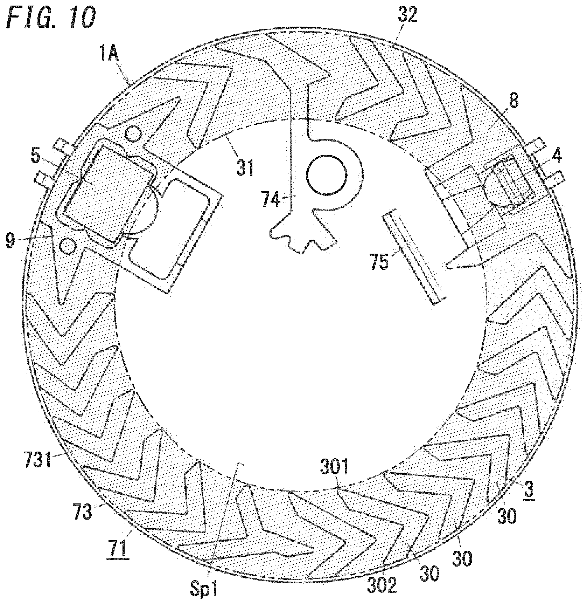

As illustrated in FIG. 10, a smoke detector 1A according to the present embodiment is different from the smoke detector 1 of the first embodiment in the shape and the like of a wall structure 3. Components similar to those in the first embodiment are hereinafter denoted by the same reference signs as those in the first embodiment, and the description thereof is accordingly omitted.

As illustrated in FIG. 10, in the smoke detector 1A, almost no space is formed between an outer peripheral edge of an upper surface 731 of a bottom plate 73 of a first case 71 and an outer side surface 32 of the wall structure 3 in plan view. Moreover, in the present embodiment, the supplementary light shielding wall 76 (see FIG. 7) is omitted. Moreover, the shape of each of a plurality of pieces 30 forming the wall structure 3 also differs from that in the smoke detector 1 of the first embodiment. FIG. 10 is a plan view illustrating the detection block 10, where the second case 72 is detached, that is, the second case 72 is omitted. Moreover, in FIG. 10, an inner side surface 31 and the outer side surface 32 are denoted by imaginary lines (long dashed double-short dashed lines) and an area corresponding to the wall structure 3 is shaded (dot-hatched).

Moreover, in the smoke detector 1A, the exterior shape of a light emitting element 4 is also different from that of the smoke detector 1 of the first embodiment. Note that also in the present embodiment, the light emitting element 4 is a so-called side view type light emitting diode that laterally outputs light when a surface (bottom surface 43) from which lead terminals 402 protrude is directed downward. The light emitting element 4 is disposed between the inner side surface 31 and the outer side surface 32 of the wall structure 3 with a light emission surface 41 of the light emitting element 4 facing the inner side surface 31.

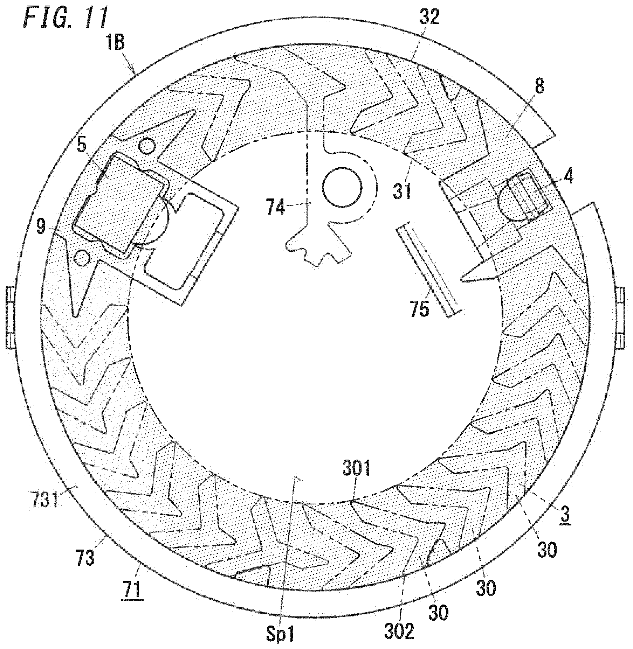

Moreover, FIG. 11 shows a smoke detector 1B according to a variation of the second embodiment. The smoke detector 1B shown in FIG. 11 has a wall structure 3 provided in a second case 72 instead of a first case 71. FIG. 11 is a plan view illustrating a detection block 10, where the second case 72 is detached, that is, the second case 72 is omitted. Therefore, in FIG. 11, the wall structure 3 is represented by an imaginary line (long dashed double-short dashed line). Moreover, in FIG. 11, an inner side surface 31 and the outer side surface 32 are denoted by imaginary lines (long dashed double-short dashed lines) and an area corresponding to the wall structure 3 is shaded (dot-hatched). Moreover, in the example shown in FIG. 11, a light shielding wall 74 is, together with the wall structure 3, provided in the second case 72. Also in the smoke detector 1B having such a configuration, the wall structure 3 is disposed to surround a detection space Sp1 in plan view as in the case of the smoke detector 1A in a state where the first case 71 and the second case 72 are coupled to each other.

The configuration (including the variation) of the second embodiment is accordingly applicable in combination with the configuration (including variations) described in the first embodiment.

### (Third Embodiment)

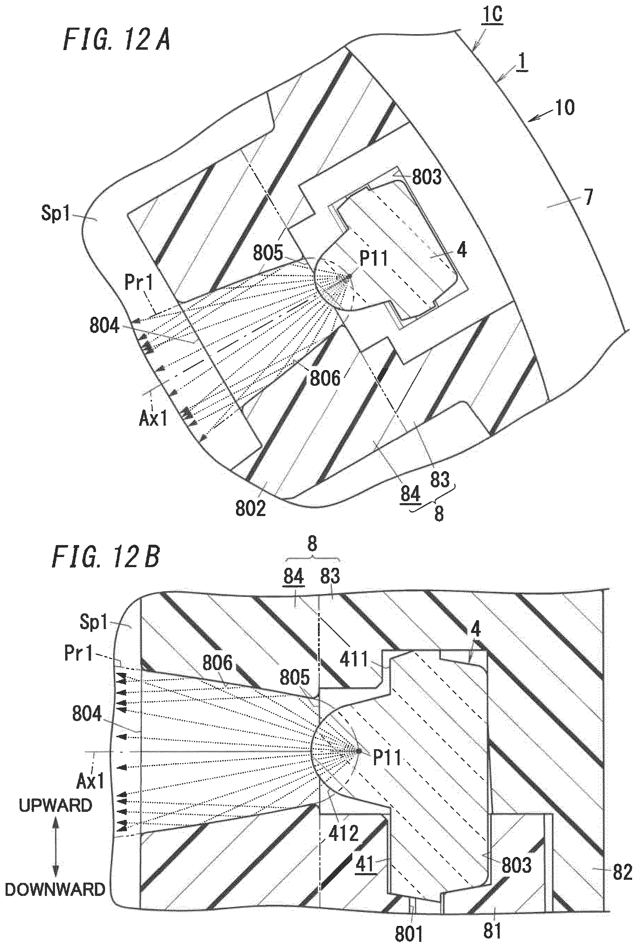

As illustrated in FIGS. 12A and 12B, a smoke detector 1C according to the present embodiment differs from the smoke detector 1 of the first embodiment in shape and the like of a light emitting element holder 8. Components similar to those in the first embodiment are hereinafter denoted by the same reference signs as those in the first embodiment, and the description thereof is accordingly omitted.

In the smoke detector 1C according to the present embodiment, the light emitting element holder 8 has a light emitting holder 83 and a light emission guide 84 as shown in FIGS. 12A and 12B. The light emitting holder 83 has a function of holding a light emitting element 4 and positioning the light emitting element 4. That is, the positioning surface 803 described above is included in the light emitting holder 83. On the other hand, the light emission guide 84 is a portion which is located in front of the light emitting element 4 and through which light from the light emitting element 4 passes. That is, the light emission guide 84 has a function of allowing the light from the light emitting element 4 to pass therethrough to direct (guide) the light from the light emitting element 4 to a detection space Sp1. The light emitting holder 83 and the light emission guide 84 are integrated with each other, but in FIGS. 12A and 12B and other figures, the border between the light emitting holder 83 and the light emission guide 84 is indicated by an imaginary line (long dashed double-short dashed line). In the present embodiment, since the light emitting element holder 8 is divided into two members, namely, a first holder 81 and a second holder 82 as described above, each of the light emitting holder 83 and the light emission guide 84 is also formed to extend over the two members, namely, the first holder 81 and the second holder 82.

As shown in FIGS. 12A and 12B, the light emission guide 84 has an incident opening 805 which is open toward the light emitting element 4, an output opening 804 which is open toward the detection space Sp1, and a light emission-side peripheral surface 806. Specifically, the light emission guide 84 has a cylindrical shape, and the light from the light emitting element 4 passes through an internal space of the light emission guide 84. At this time, the light from the light emitting element 4 enters the internal space of the light emission guide 84 via the incident opening 805 and is emitted from the output opening 804 to the detection space Sp1. Here, the light emission-side peripheral surface 806 is a surface disposed between the incident opening 805 and the output opening 804 so as to surround an optical axis Ax1 of the light emitting element 4. In the present embodiment, since the light emission guide 84 is cylindrical, the light emission-side peripheral surface 806 is an inner peripheral surface of the light emission guide 84.

In the present embodiment, as shown in FIGS. 12A and 12B, the light emission-side peripheral surface 806 is tilted toward the output opening 804 with respect to the optical axis Ax1 of the light emitting element 4. That is, the light emission-side peripheral surface 806 is not parallel to the optical axis Ax1 of the light emitting element 4 but is tilted with respect to the optical axis Ax1 of the light emitting element 4. In particular, in the present embodiment, since the light emission guide 84 is cylindrical, the light emission-side peripheral surface 806 is tilted with respect to the optical axis Ax1 of the light emitting element 4 such that the inner diameter of the light emission guide 84 increases as the distance from the incident opening 805 to the output opening 804 decreases.

Moreover, in the present embodiment, the light emission-side peripheral surface 806 has a shape formed along a paraboloid of revolution whose center axis is the optical axis Ax1 of the light emitting element 4. That is, as shown in FIGS. 12A and 12B, the light emission-side peripheral surface 806 is formed along a surface generated when a parabola Pr1 is rotated with the optical axis Ax1 of the light emitting element 4 as the center, that is, along a solid of revolution of the parabola Pr1. The parabola Pr1 is a virtual line having an intersection point (apex) with the optical axis Ax1 as a reference point P11.

According to the configuration described above, when light output from the light emitting element 4 passes through the light emission guide 84, part of the light is reflected off the light emission-side peripheral surface 806, and thereby, the orientation of a light beam is changed such that the angle of the light beam to the optical axis Ax1 of the light emitting element 4 is reduced. Moreover, since such a light emission-side peripheral surface 806 is provided in the light emitting element holder 8, the positional relationship between the light emission-side peripheral surface 806 and the light emitting element 4 can be set with relatively high accuracy, and control of the orientation of the light reflected off the light emission-side peripheral surface 806 becomes easy. In sum, the light emission-side peripheral surface 806 has a function of converting the light output from the light emitting element 4 into light similar to collimated light along the optical axis Ax1 of the light emitting element 4. Thus, the light output from the output opening 804 of the light emission guide 84 is less likely to be incident on an inner surface or the like of a detection case 7, thereby reducing the possibility that the light output from the output opening 804 serves as so-called "stray light" to reduce the detection accuracy of the smoke detector 1.

In particular, in the present embodiment, since the light emission-side peripheral surface 806 has a shape formed along a paraboloid of revolution, the light exiting the reference point PI 1 is to be reflected off the light emission-side peripheral surface 806 in a direction similar to the direction of the optical axis Ax1. Therefore, for example, when a light emitting part 403 (see FIG. 8) is located on the reference point P11, it becomes easy for the output opening 804 to emit a light beam along the optical axis Ax1. In other words, light similar to collimated light is output from the output opening 804. In FIGS. 12A and 12B, some of pathways (optical paths) of the light output from the light emitting element 4 is schematically indicated by dotted line arrows.

Moreover, when the light emitting part 403 is located in the vicinity of a focal point of the parabola Pr1, the light output from the light emitting element 4 is reflected off the light emission-side peripheral surface 806 in a direction much similar to the optical axis Ax1. That is, light much similar to collimated light is output from the output opening 804.

As described above, the light emission-side peripheral surface 806 enables light output from the light emitting element 4 to be collected in front of the light emitting element 4, thereby increasing power of light in front of the light emitting element 4. Moreover, since the light emission-side peripheral surface 806 improves the directionality of the light output from the light emitting element 4, the light is less susceptible to the influence of, for example, a foreign substance adhering to the light shielding wall 74.

The configuration (including the variation) of the third embodiment is accordingly applicable in combination with the configuration (including variations) described in the first embodiment.

### (Fourth Embodiment)

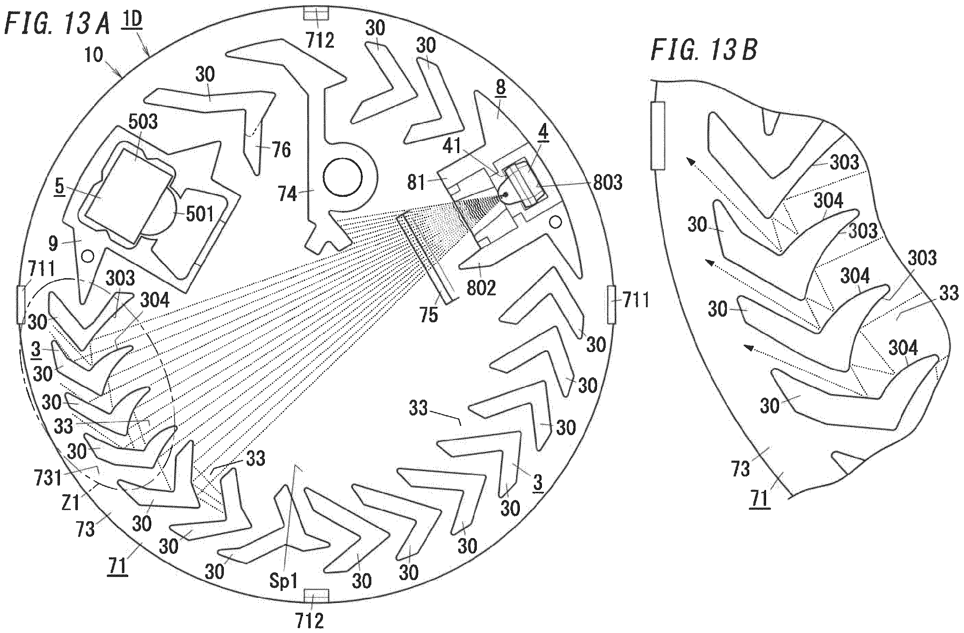

As illustrated in FIGS. 13A and 13B, a smoke detector ID according to the present embodiment differs from the smoke detector 1 of the first embodiment in shape of each of a plurality of pieces 30 forming a wall structure 3. In FIGS. 13A and 13B, some of light beams output from a light emitting element 4 are schematically indicated by dotted line arrows. FIG. 13B is an enlarged view of area Z1 of FIG. 13A. Components similar to those in the first embodiment are hereinafter denoted by the same reference signs as those in the first embodiment, and the description thereof is accordingly omitted.

As illustrated in FIG. 13A, in the present embodiment, at least some of the plurality of pieces 30 each has a concave surface 303 at its surface facing a detection space Sp1, that is, a surface on which direct light from the light emitting element 4 is incident. Here, of the plurality of pieces 30, only pieces 30 disposed at locations on which the direct light from the light emitting element 4 is incident, that is, only pieces 30 located substantially in front of the light emitting element 4 have the concave surfaces 303. Each concave surface 303 is curved so as to be, for example, part of a parabola or part of an ellipse in plan view. Moreover, in the present embodiment, at least some of the plurality of pieces 30 each have a convex surface 304 at a back surface of the concave surface 303, that is, a surface facing away from the concave surface 303. That is, when attention is focused on a pair of adjacent pieces 30, the convex surface 304 of one piece 30 faces the concave surface 303 of the other piece 30.

According to the smoke detector ID of the present embodiment, when part of the light output from the light emitting element 4 is incident on any of the pieces 30, the light is reflected off the concave surface 303 of the piece 30. The light reflected off the concave surface 303 of any of the pieces 30 is reflected toward an adjacent piece 30 adjacent to this piece 30 as shown in FIG. 13B. At this time, the concave surface 303 acts so as to collect light incident as substantially collimated light on the concave surface 303. Then, the light reflected off the concave surface 303 is incident on the convex surface 304 of the adjacent piece 30. In this way, the light reflected off each of the concave surface 303 and the convex surface 304 at least once is easily guided to the outside of the detection space Sp1 through a corresponding one of smoke passage holes 33 serving as gaps formed between adjacent pieces 30 in pairs. As a result, the light which is incident on the piece 30 from the light emitting element 4 is easily guided to the outside of the detection space Sp1, and it is possible to reduce "stray light" that occurs in the interior of the detection space Sp1. Therefore, in the smoke detector 1D according to the present embodiment, it is possible to suppress an increase in stray light while the detection accuracy is improved.

As a variation of the fourth embodiment, at least some of the plurality of pieces 30 may have convex surfaces 304 instead of the concave surfaces 303 or may have concave surfaces 303 instead of the convex surfaces 304. Alternatively, at least some of the plurality of pieces 30 may have flat surfaces instead of either of the concave surfaces 303 or the convex surfaces 304.

The configuration (including the variation) of the fourth embodiment is accordingly applicable in combination with the configurations (including variations) described in the first to third embodiments.

### Summary

As described above, a smoke detector (1, 1A to 1D) of a first aspect includes a wall structure (3), a light emitting element (4), and a light receiving element (5). The wall structure (3) surrounds a detection space (Spl) when viewed from one direction orthogonal to one plane (an upper surface 731 of a bottom plate 73). The light emitting element (4) has a light emission surface (41) and is configured to emit light from the light emission surface (41) toward the detection space (Spl). The light receiving element (5) is disposed at a location where the light receiving element (5) is free from incidence of direct light from the light emitting element (4) and scattered light by smoke in the detection space (Spl) is incident on the light receiving element (5). The wall structure (3) has an inner side surface (31) facing the detection space (Spl) and an outer side surface (32) facing away from the detection space (Spl) on opposing sides in a thickness direction of the wall structure (3). The thickness direction is a direction along the one plane. The wall structure (3) is configured to allow the smoke to pass therethrough and suppress light transmission in the thickness direction. The light emitting element (4) is disposed between the inner side surface (31) and the outer side surface (32) with the light emission surface (41) facing the inner side surface (31).

With this aspect, since the light emitting element (4) is fit within the thickness of the wall structure (3), it is possible to widely secure the detection space (Spl) as compared to a configuration in which the light emitting element (4) protrudes from the inner side surface (31) of the wall structure (3). When the detection space (Spl) is enlarged, an optical path length, for example, between the light emitting element (4) and the light receiving element (5) increases, thereby leading to, for example, improvement of the sensitivity of the smoke detector (1, 1A to 1D). Since the light emitting element (4) is fit within the thickness of the wall structure (3), it is possible to further downsize the smoke detector (1, 1A to 1D) as compared to a configuration in which the light emitting element (4) protrudes from the outer side surface (32) of the wall structure (3). According to the smoke detector (1, 1A to 1D), downsizing is possible while the detection space (Spl) is relatively widely secured.

In a smoke detector (1, 1A to 1D) of a second aspect referring to the first aspect, the wall structure (3) is a collection of a plurality of pieces (30) aligned along the inner side surface (31) and is configured to allow the smoke to pass through a space between the plurality of pieces (30). The inner side surface (31) is a surface passing through end edges (301) which are end edges of the plurality of pieces (30) and which face the detection space (Spl). The outer side surface (32) is a surface passing through end edges (302) which are end edges of the plurality of pieces (30) and which face away from the detection space Sp1.

With this aspect, the shape of each of the plurality of pieces (30) can be individually adjusted, thereby increasing the degree of freedom of design of the wall structure (3).

A smoke detector (1, 1A to 1D) of a third aspect referring to the first or second aspect further includes[]a light emitting element holder (8) that holds the light emitting element (4). At least part of the light emitting element holder (8) is disposed between the inner side surface (31) and the outer side surface (32).

With this aspect, since at least part of the light emitting element holder (8) is fit within the thickness of the wall structure (3), it is possible to widely secure the detection space (Spl) as compared to a configuration in which the entirety of the light emitting element holder (8) protrudes from the inner side surface (31) of the wall structure (3). Since at least the part of the light emitting element holder (8) is fit within the thickness of the wall structure (3), it is possible to further downsize the smoke detector (1, 1A to 1D) as compared to a configuration in which the entirety of the light emitting element holder (8) protrudes from the outer side surface (32) of the wall structure (3).

In a smoke detector (1, 1A to 1D) of a fourth aspect referring to the third aspect, the light emitting element holder (8) is disposed within an area surrounded by the outer side surface (32).

With this aspect, it is possible to further downsize the smoke detector (1, 1A to 1D) as compared to a configuration in which the light emitting element holder (8) protrudes from the outer side surface (32) of the wall structure (3).

In a smoke detector (1, 1A to 1D) of a fifth aspect referring to the third or fourth aspect, the light emitting element holder (8) has a wire passing hole (801) formed at a location which is located between the inner side surface (31) and the outer side surface (32) and which is closer to the outer side surface (32) than to the inner side surface (31). The wire passing hole (801) is configured to allow a lead wire (lead terminal 402) electrically connected to the light emitting element (4) to pass therethrough.

With this aspect, since the wire passing hole (801) through which the lead wire is to pass is located closer to the outer side surface (32), the light emitting element (4) can be disposed closer to the outer side surface (32), and therefore, the detection space (Spl) can be more widely secured.

In a smoke detector (1, 1A to 1D) of a sixth aspect referring to any one of the third or fifth aspects, the light emitting element holder (8) has a light shielding piece (802). The light shielding piece (802) is configured to shield the light output from the light emitting element (4) and reflected off a surface of the light emitting element holder (8).

With this aspect, the light shielding piece (802) is located relatively close to the light emitting element (4), and therefore, a decrease in sensitivity due to influence of light reflected off the surface of the light emitting element holder (8) can be suppressed even in the case of the light emitting element (4) having a relatively wide angle of light.

In a smoke detector (1, 1A to 1D) of a seventh aspect referring to any one of the third to sixth aspects, the light emitting element holder (8) has a positioning surface (803). The positioning surface (803) is a surface intersecting an optical axis (Ax1) of the light emitting element (4) and comes into contact with the light emitting element (4) from a side facing the outer side surface (32) to position the light emitting element (4).

With this aspect, the positioning surface (803) of the light emitting element holder (8) comes into surface contact with the light-emitting element (4) from the side facing the outer side surface (32) to position the light-emitting element (4), and therefore, the light emitting element holder (8) can maintain the position of the light-emitting element (4) with relatively high accuracy. Therefore, in the smoke detector (1, 1A to 1D), a decrease in sensitivity due to the tilt or the like of the light emitting element (4) can be suppressed.

In a smoke detector (1, 1A to 1D) of an eighth aspect referring to the seventh aspect, the positioning surface 803 is resilient and is configured to apply, to the light emitting element 4, resilient force in a direction in which the light emitting element 4 is pushed from the side facing the outer side surface 32.

With this aspect, since the positioning surface (803) is pressed against the light emitting element (4), the position of the light emitting element (4) can be maintained with increased accuracy.

In a smoke detector (1, 1A to 1D) of a ninth aspect referring to any one of the third to eighth aspects, the light emitting element holder (8) has a light emission guide (84) through which light from the light emitting element (4) passes. The light emission guide (84) has an incident opening (805) which is open to the light emitting element (4), an output opening (804) which is open to the detection space (Sp1), and a light emission-side peripheral surface (806). The light emission-side peripheral surface (806) surrounds an optical axis (Ax1) of the light emitting element (4) between the incident opening (805) and the output opening (804). The light emission-side peripheral surface (806) is tilted toward the output opening (804) with respect to the optical axis (Ax1) of the light emitting element (4).

With this aspect, when the light output from the light emitting element (4) passes through the light emission guide (84), at least part of the light is reflected off the light emission-side peripheral surface (806) of the light emission guide (84), and thereby, the angle of a light beam to the optical axis (Ax1) of the light emitting element (4) is reduced. In addition, since the light emission-side peripheral surface (806) is provided in the light emitting element holder (8), the positional relationship between the light emission-side peripheral surface (806) and the light emitting element (4) can be set with relatively high accuracy, and control of the orientation of the light reflected off the light emission-side peripheral surface (806) becomes easy. Therefore, for the light beam reflected off the light emission-side peripheral surface (806) and output from the output opening (804), the angle of the light beam to the optical axis (Ax1) of the light emitting element (4) can be kept relatively small. This reduces the possibility that the light reflected off the light emission-side peripheral surface (806) and output from the output opening (804) is reflected off, for example, an inner surface (700) or the like of the detection case (7) and is incident on the light receiving element (5). As a result, the light reflected off the inner surface (700) or the like of the detection case (7) is less likely to enter the light receiving element (5), and therefore, it is possible to suppress an increase in stray light while the detection accuracy of the smoke detector (1, 1A to 1E) is improved.

In a smoke detector (1, 1A to 1D) of a tenth aspect referring to the ninth aspect, the light emission-side peripheral surface (806) has a shape formed along a paraboloid of revolution whose center axis is the optical axis (Ax1) of the light emitting element (4).

With this aspect, light much similar to collimated light is output from the output opening (804), and thus, it is possible to further suppress a decrease in detection accuracy of the smoke detector (1, 1A to IE).

In a smoke detector (1, 1A to 1D) of an eleventh aspect referring to any one of the first to tenth aspects, a lead wire (lead terminal 402) electrically connected to the light-emitting element (4) protrudes from the light emitting element (4) in a direction orthogonal to an optical axis (Ax1) of the light emitting element (4).

With this aspect, a space occupied by the light-emitting element (4) in a thickness direction of the wall structure (3) is small as compared to a light-emitting element configured such that a lead terminal protrudes in a direction parallel to the optical axis of the light-emitting element. Thus, while the dimension of the wall structure (3) in the thickness direction is kept relatively small, the light emitting element (4) can be disposed between the inner side surface (31) and the outer side surface (32) of the wall structure (3) with the light emission surface (41) facing the inner side surface (31).

In a smoke detector (1, 1A to 1D) of a twelfth aspect referring to any one of the first to eleventh aspects, the light emitting element (4) further includes: a rear surface (42) facing the outer side surface (32); and a bottom surface (43) connecting the light emission surface (41) to the rear surface (42). A lead wire (lead terminal 402) electrically connected to the light emitting element (4) protrudes from the bottom surface (43).

With this aspect, a space occupied by the light-emitting element (4) in a thickness direction of the wall structure (3) is small as compared to a light-emitting element configured such that a lead terminal protrudes from a surface on an opposite side from the light emission surface. Thus, while the dimension of the wall structure (3) in the thickness direction is kept relatively small, the light emitting element (4) can be disposed between the inner side surface (31) and the outer side surface (32) of the wall structure (3) with the light emission surface (41) facing the inner side surface (31).

In a smoke detector (1, 1A to 1D) of a thirteenth aspect referring to the twelfth aspect, the bottom surface (43) is along the one plane (the upper surface 731 of the bottom plate 73).

With this aspect, the lead terminal (402) protruding from the bottom surface (43) is substantially orthogonal to the one plane (the upper surface 731 of the bottom plate 73). Thus, it is not necessary to adopt a bent structure to part of the lead terminal (402) in order to draw the lead terminal (402) from the one plane, and it is thus possible to reduce the occupation space of the lead terminal (402) in the thickness direction of the wall structure (3).

In a smoke detector (1, 1A to 1D) of a fourteenth aspect referring to any one of the first to thirteenth aspects, an optical axis (Ax1) of the light emitting element (4) and an optical axis (Ax2) of the light receiving element (5) are along the one plane (the upper surface 731 of the bottom plate 73).

With this aspect, the optical axis (Ax1) of the light emitting element (4) and the optical axis (Ax2) of the light receiving element (5) are substantially parallel to each other, and a relatively long optical path length between the light emitting element (4) and the light receiving element (5) can be secured within the detection space (Spl) which is limited.

The second to fourteenth aspects are not essential configurations for the smoke detector (1, 1A to 1D) and may thus be omitted accordingly.

### Reference Signs List

- 1, 1A to ID: SMOKE DETECTOR
- 3: WALL STRUCTURE
- 4: LIGHT EMITTING ELEMENT
- 5: LIGHT RECEIVING ELEMENT
- 8: LIGHT EMITTING ELEMENT HOLDER
- 30: PIECE
- 31: INNER SIDE SURFACE
- 32: OUTER SIDE SURFACE
- 41: LIGHT EMISSION SURFACE
- 42: REAR SURFACE
- 43: BOTTOM SURFACE
- 84: LIGHT EMISSION GUIDE
- 402: LEAD TERMINAL (LEAD WIRE)
- 731: UPPER SURFACE OF BOTTOM PLATE (ONE PLANE)
- 801: WIRE PASSING HOLE
- 802: LIGHT SHIELDING PIECE
- 803: POSITIONING SURFACE
- 804: OUTPUT OPENING
- 805: INCIDENT OPENING
- 806: LIGHT EMISSION-SIDE PERIPHERAL SURFACE
- Ax1: OPTICAL AXIS OF LIGHT EMITTING ELEMENT
- Ax2: OPTICAL AXIS OF LIGHT RECEIVING ELEMENT
- Sp1: DETECTION SPACE

## Claims

1. A smoke detector, comprising:
a wall structure surrounding a detection space when viewed from one direction orthogonal to one plane;
a light emitting element having a light emission surface and being configured to emit light from the light emission surface toward the detection space; and
a light receiving element disposed at a location where the light receiving element is free from incidence of direct light from the light emitting element and scattered light by smoke in the detection space is incident on the light receiving element,
the wall structure having an inner side surface facing the detection space and an outer side surface facing away from the detection space on opposing sides in a thickness direction of the wall structure, the thickness direction being a direction along the one plane,
the wall structure being configured to allow the smoke to pass therethrough and suppress light transmission in the thickness direction,
the light emitting element being disposed between the inner side surface and the outer side surface with the light emission surface facing the inner side surface.

2. The smoke detector of claim 1, wherein
the wall structure is a collection of a plurality of pieces aligned along the inner side surface and is configured to allow the smoke to pass through a space between the plurality of pieces,
the inner side surface is a surface passing through end edges which are end edges of the plurality of pieces and which face the detection space, and
the outer side surface is a surface passing through end edges which are end edges of the plurality of pieces and which face away from the detection space.

3. The smoke detector of claim 1 or 2, further comprising:
a light emitting element holder that holds the light emitting element, wherein
at least part of the light emitting element holder is disposed between the inner side surface and the outer side surface.

4. The smoke detector of claim 3, wherein
the light emitting element holder is disposed within an area surrounded by the outer side surface.

5. The smoke detector of claim 3 or 4, wherein
the light emitting element holder has a wire passing hole formed at a location which is located between the inner side surface and the outer side surface and which is closer to the outer side surface than to the inner side surface, and
the wire passing hole is configured to allow a lead wire electrically connected to the light emitting element to pass therethrough.

6. The smoke detector of any one of claims 3 to 5, wherein
the light emitting element holder has a light shielding piece configured to shield light output from the light emitting element and reflected off a surface of the light emitting element holder.

7. The smoke detector of any one of claims 3 to 6, wherein
the light emitting element holder has a positioning surface which is a surface intersecting an optical axis of the light-emitting element and which comes into contact with the light-emitting element from a side facing the outer side surface to position the light-emitting element.

8. The smoke detector of claim 7, wherein
the positioning surface is resilient and is configured to apply, to the light emitting element, resilient force in a direction in which the light emitting element is pushed from the side facing the outer side surface.

9. The smoke detector of any one of claims 3 to 8, wherein
the light emitting element holder has a light emission guide through which light from the light emitting element passes,
the light emission guide includes: an incident opening which is open to the light emitting element; an output opening which is open to the detection space; and a light emission-side peripheral surface surrounding an optical axis of the light emitting element between the incident opening and the output opening, and
the light emission-side peripheral surface is tilted toward the output opening with respect to the optical axis of the light emitting element.

10. The smoke detector of claim 9, wherein
the light emission-side peripheral surface has a shape formed along a paraboloid of revolution whose center axis is the optical axis of the light emitting element.

11. The smoke detector of any one of claims 1 to 10, wherein
a lead wire electrically connected to the light-emitting element protrudes from the light emitting element in a direction orthogonal to an optical axis of the light emitting element.

12. The smoke detector of any one of claims 1 to 11, wherein
the light emitting element further includes a rear surface facing the outer side surface and a bottom surface connecting the light emission surface to the rear surface, and
a lead wire electrically connected to the light emitting element protrudes from the bottom surface.

13. The smoke detector of claim 12, wherein
the bottom surface is along the one plane.

14. The smoke detector of any one of claims 1 to 13, wherein
an optical axis of the light emitting element and an optical axis of the light receiving element are along the one plane.
